# FASCICULE DE BREVET EUROPEEN

(11) **EP 3 224 079 B1**
(45) Date de publication et mention de la délivrance du brevet: **14.07.2021**
(21) Numéro de dépôt: 15820211.9
(22) Date de dépôt: 23.11.2015
(51) Int. Cl.: B60L 3/00, H02P 29/02, H02M 1/32, H02H 7/08

(54) **ONDULEUR A SÉCURITÉ RENFORCÉE**
WECHSELRICHTER MIT VERBESSERTER SICHERHEIT
INVERTER WITH IMPROVED SAFETY

(30) Priorité: 24.11.2014 FR 1461351
(43) Date de publication de la demande: 04.10.2017
(73) Titulaire: Valeo Systèmes de Contrôle Moteur, 95800 Cergy Saint Christophe (FR)
(72) Inventeur: CONDAMIN, Bruno, 95800 Cergy Saint Christophe (FR); DE SOUSA, Luis, 95800 Cergy Saint Christophe (FR); ZOU, Liyu, 78800 Houilles (FR); COIA-HURET, Nathalie, 95800 Cergy Saint Christophe (FR)
(74) Mandataire: Argyma
(86) Numéro de dépôt international: PCT/FR2015/053169
(87) Numéro de publication internationale: WO 2016/083714

(56) Documents cités:
- EP-A1- 2 341 609
- US-A- 6 153 993
- US-A1- 2011 278 918
- US-B2- 8 410 740
- US-B2- 8 688 301

## Description

La présente invention concerne le domaine des onduleurs et notamment les onduleurs de puissance utilisés dans les véhicules automobiles.

Ces onduleurs sont utilisés dans les véhicules électriques ou hybrides pour convertir le courant continu fourni par des batteries, généralement haute tension, en courant alternatif permettant d'alimenter le moteur électrique.

L'un des points essentiels pour la mise au point des moteurs électriques destinés à équiper un véhicule automobile concerne la sécurité des passagers comme des personnes se trouvant à proximité du véhicule. Ainsi, en cas de dysfonctionnement ou panne d'un élément lié à l'électronique de commande et notamment à l'onduleur du moteur électrique qui est directement lié aux roues et à la propulsion du véhicule, une configuration de repli ou de secours doit être mise en œuvre pour éviter un accident.

Un moyen envisageable pour éviter un accident consiste à établir une position de secours des transistors de l'onduleur dans laquelle ils se mettraient en position ouverte. Si la force électromotrice redressée créée par les aimants du rotor de la machine est supérieure à la tension du bus continu, généralement la batterie, alors une telle position crée un couple résistant qui freine le véhicule. Ainsi, en cas de dysfonctionnement à haute vitesse, par exemple sur autoroute, le véhicule freinerait brusquement, ce qui peut être très dangereux.

Une autre solution consiste à doubler certains éléments liés à l'électronique de commande et à utiliser des fonctions logiques « OU » pour générer une commande dans le cas d'un dysfonctionnement d'un des deux éléments. Cependant, en cas de surtension de l'alimentation, il pourrait y avoir une défaillance de la fonction « OU ». De plus, le doublement des éléments liés à l'électronique de commande entraîne un coût supplémentaire et peut poser des problèmes de synchronisation si deux éléments doivent envoyer un message simultanément suite à un dysfonctionnement.

Il convient donc de trouver une solution permettant d'assurer la sécurité des utilisateurs et personnes à proximité du véhicule en cas de dysfonctionnement ou de panne de l'un des éléments de l'onduleur.

Le document US 8410740 B2 décrit un onduleur ayant une pluralité de branches connectées en parallèle avec deux sources d'alimentation indépendantes. Cependant, ce document n'enseigne pas, notamment, comment contrôler la survenance d'un dysfonctionnement sur l'une ou l'autre des sources d'alimentation.

Pour pallier ces inconvénients, la présente invention a donc pour objet un onduleur conforme à la revendication 1 et un procédé conforme à la revendication 19.

L'utilisation de deux sources d'alimentation pour alimenter indépendamment le côté haut et le côté bas de l'onduleur combiné à l'utilisation de deux composants logiques placés respectivement du côté haut et du côté bas permet de pouvoir mettre en court-circuit les interrupteurs du côté haut ou du côté bas de l'onduleur en cas de dysfonctionnement de l'un des éléments de l'onduleur. La mise en court-circuit des interrupteurs d'un côté de l'onduleur permettant de contrôler la force électromotrice créée par les aimants du rotor et ainsi de mettre le moteur électrique et donc le véhicule en roue libre.

En particulier, la mise en court-circuit des premiers interrupteurs correspond à une fermeture des premiers interrupteurs et une ouverture des deuxièmes interrupteurs ; et la mise en court-circuit des deuxièmes interrupteurs correspond à une fermeture des deuxièmes interrupteurs et une ouverture des premiers interrupteurs.

Selon un mode de réalisation de la présente invention, l'onduleur comprend également une unité de traitement destinée à communiquer d'une part avec une unité de commande et d'autre part avec le premier et le deuxième composant logique.

Selon un mode de réalisation, l'unité de traitement est configurée pour détecter un dysfonctionnement d'un élément du côté haut ou du côté bas.

Selon un mode de réalisation de la présente invention, l'onduleur comprend également une pluralité de comparateurs dont les entrées sont reliées respectivement aux points milieux des branches et dont les sorties sont reliées à l'unité de traitement, les comparateurs étant configurés pour comparer une grandeur électrique de leur point milieu respectif à une valeur qui est fonction de la configuration des interrupteurs, l'unité de traitement étant configurée pour détecter un dysfonctionnement d'un élément du côté haut ou du côté bas à partir d'un écart entre ladite grandeur électrique et ladite valeur.

Selon un mode de réalisation, l'unité de traitement est configurée pour détecter un dysfonctionnement d'un élément du côté haut, respectivement d'un élément du côté bas, à partir de signaux de contrôle envoyés par ledit composant logique du côté haut, respectivement par ledit composant logique du côté bas.

Selon un mode de réalisation, les composants logiques du côté haut et/ou du côté bas sont configurés pour détecter un dysfonctionnement de l'unité de traitement à partir de signaux de contrôle envoyés par ladite unité de traitement.

Selon un mode de réalisation, l'unité de traitement est configurée pour commander la mise en court-circuit des premiers ou deuxièmes interrupteurs en fonction d'un dysfonctionnement d'un élément du côté haut ou du côté bas.

Selon un mode de réalisation, les composants logiques du côté bas et du côté haut sont configurés pour commander la mise en court-circuit des deuxièmes, respectivement des premiers, interrupteurs en cas de dysfonctionnement de l'unité de traitement.

Selon un mode de réalisation, l'unité de commande est comprise dans l'onduleur.

Selon un mode de réalisation, l'unité de commande est configurée pour détecter un dysfonctionnement de l'unité de traitement, et/ou l'unité de traitement est configurée pour détecter un dysfonctionnement de l'unité de commande.

Ainsi, la sécurité de l'onduleur en cas de défaillance est renforcée.

Selon un mode de réalisation, l'unité de commande est configurée pour détecter un dysfonctionnement de l'unité de traitement à partir de signaux de contrôle envoyés par ladite unité de traitement, et/ou l'unité de traitement est configurée pour détecter un dysfonctionnement de l'unité de commande à partir de signaux de contrôle envoyés par ladite unité de commande.

Selon un mode de réalisation, l'unité de traitement ou l'unité de commande sont configurées pour commander la mise en court-circuit des deuxièmes, ou des premiers, interrupteurs en cas d'un dysfonctionnement.

Selon un mode de réalisation, l'unité de commande ou l'unité de traitement sont configurées pour commander la mise en court-circuit des premiers ou deuxièmes interrupteurs par l'intermédiaire de signaux de permission permettant d'activer ou désactiver les premiers ou deuxièmes interrupteurs.

Selon un mode de réalisation, l'unité de commande est configurée pour envoyer des signaux de permission vers le côté haut permettant d'activer ou désactiver les interrupteurs du côté haut, et l'unité de traitement est configurée pour envoyer des signaux de permission vers le côté bas permettant d'activer ou désactiver les interrupteurs du côté bas; ou l'unité de commande est configurée pour envoyer des signaux de permission vers le côté bas permettant d'activer ou désactiver les interrupteurs du côté bas, et l'unité de traitement est configurée pour envoyer des signaux de permission vers le côté haut permettant d'activer ou désactiver les interrupteurs du côté haut.

Selon un mode de réalisation, l'unité de traitement est un élément distinct de l'unité de commande.

Selon un mode de réalisation, l'onduleur est configuré pour alimenter un moteur électrique de véhicule automobile à partir de la première source d'alimentation ou de la deuxième source d'alimentation.

Selon un mode de réalisation, le côté haut comprend des premières unités de pilotage, le côté bas comprend des deuxièmes unités de pilotage, les premiers et les deuxièmes interrupteurs étant pilotés respectivement via les premières et les deuxièmes unités de pilotage.

Selon un mode de réalisation, les signaux de contrôle sont des signaux de surveillance ou des signaux d'erreur.

Selon un mode de réalisation, l'unité de traitement et l'unité de commande sont toutes les deux alimentées par la première, respectivement la deuxième, source d'alimentation.

Selon un mode de réalisation, l'unité de traitement est alimentée par la première, respectivement la deuxième, source d'alimentation ; et l'unité de commande est alimentée par la deuxième, respectivement la première, source d'alimentation.

La présente invention concerne également un procédé de commande d'un onduleur selon la revendication 19 dans lequel en cas de dysfonctionnement de l'unité de traitement, le premier composant logique, respectivement le deuxième composant logique, détecte ledit dysfonctionnement de l'unité de traitement à partir des signaux de contrôle envoyés par ladite unité de traitement et commande la mise en court-circuit des premiers, respectivement des deuxièmes, interrupteurs.

La présente invention concerne aussi un procédé de commande d'un onduleur selon l'invention dans lequel, en cas de dysfonctionnement d'un élément du côté haut ou d'un élément du côté bas, l'unité de traitement détecte ledit dysfonctionnement et commande la mise en court-circuit des premiers interrupteurs ou des deuxièmes interrupteurs en fonction du type de dysfonctionnement.

La présente invention concerne en outre un procédé de commande d'un onduleur selon l'invention dans lequel, en cas de dysfonctionnement de l'unité de commande, l'unité de traitement détecte ledit dysfonctionnement de l'unité de commande à partir des signaux de contrôle envoyés par l'unité de commande et commande la mise en court-circuit des premiers ou des deuxièmes interrupteurs.

La présente invention concerne également un procédé de commande d'un onduleur selon l'invention dans lequel, l'unité de traitement et l'unité de commande sont alimentées toutes les deux par la première, respectivement la deuxième, source d'alimentation et dans lequel en cas de dysfonctionnement de la première, respectivement de la deuxième, source d'alimentation, le deuxième, respectivement le premier, composant logique commande la mise en court-circuit des deuxièmes, respectivement des premiers, interrupteurs.

La présente invention concerne aussi un procédé de commande d'un onduleur selon l'invention dans lequel, l'unité de traitement est alimentée par la première, respectivement la deuxième, source d'alimentation, et l'unité de commande est alimentée par la deuxième, respectivement la première source d'alimentation ; et en cas de dysfonctionnement de la source d'alimentation alimentant l'unité de commande, l'unité de traitement commande la mise en court-circuit des interrupteurs alimentés par sa source d'alimentation ; et en cas de dysfonctionnement de la source d'alimentation alimentant l'unité de traitement, le composant logique alimenté par l'autre source d'alimentation commande la mise en court-circuit des interrupteurs alimentés par cette autre source d'alimentation.

D'autres caractéristiques et avantages de l'invention apparaîtront dans la description qui va maintenant en être faite, en référence aux dessins annexés qui en représentent, à titre indicatif mais non limitatif, un mode de réalisation possible.

Sur ces dessins :
- la figure 1 représente un schéma d'un onduleur triphasé ;
- la figure 2 représente un schéma d'une architecture d'un circuit d'alimentation et de commande d'un onduleur triphasé selon un mode de réalisation de la présente invention ;
- la figure 3 représente un schéma des signaux échangés entre les différents éléments du circuit d'alimentation et de commande d'un onduleur selon une première configuration du circuit d'alimentation ;
- la figure 4 représente un tableau des différents dysfonctionnements du circuit d'alimentation et de commande de l'onduleur, de leur mode de détection et de l'action engagée lorsque ces dysfonctionnements sont détectés dans le cas de la première configuration ;
- la figure 5 représente un schéma des signaux échangés entre les différents du circuit d'alimentation et de commande d'un onduleur selon une deuxième configuration du circuit d'alimentation ;
- la figure 6 représente un tableau des différents dysfonctionnements du circuit d'alimentation et de commande de l'onduleur, de leur mode de détection et de l'action engagée lorsque ces dysfonctionnements sont détectés dans le cas de la deuxième configuration.

Sur ces figures, les mêmes numéros de référence désignent des éléments identiques.

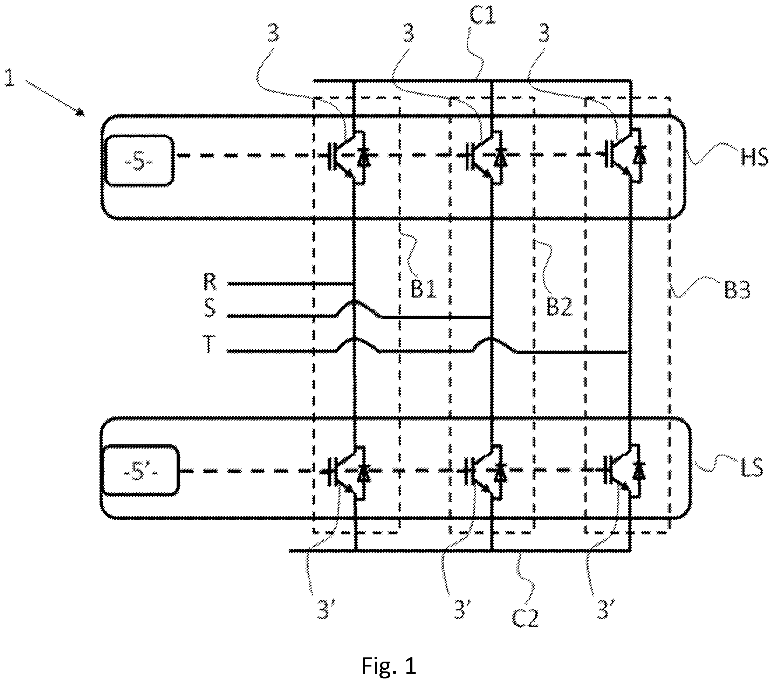

La présente invention concerne un onduleur et le procédé de commande associé. La figure 1 représente un schéma d'un exemple d'onduleur 1 comprenant trois branches notées respectivement B1, B2 et B3 montées en parallèle entre un premier point de connexion noté C1 et un deuxième point de connexion noté C2. Chaque branche B1, B2 et B3 comprend un premier interrupteur 3 relié au premier point de connexion C1 monté en série avec un deuxième interrupteur 3' relié au deuxième point de connexion C2. Les premiers interrupteurs 3 sont répartis sur un côté haut de l'onduleur 1 noté HS tandis que les deuxièmes interrupteurs 3' sont répartis sur un côté bas de l'onduleur 1 noté LS. Les points milieux des branches notés R, S et T sont reliés aux phases du moteur électrique à alimenter.

Le premier point de connexion C1 est par exemple relié à un potentiel haut d'une source d'énergie destinée à fournir de l'énergie à, ou recevoir de l'énergie depuis, le moteur électrique par l'intermédiaire de l'onduleur 1. Le deuxième point de connexion C2 est par exemple relié à un potentiel bas de cette source d'énergie.

Dans la suite de la description, l'onduleur 1 sera un onduleur triphasé à pont en H cependant, la présente invention ne se limite pas à un onduleur triphasé à pont en H mais s'étend aussi à d'autres structures d'onduleur multiphasé.

Les interrupteurs 3, 3' sont ici représentés par des transistors, par exemple des transistors bipolaires à grille isolée (« Insulated Gate bipolar transistor (IGBT) » en anglais) ou des transistors à effet de champ à grille métal-oxyde (« Metal Oxide Semiconductor Field Effect Transistor (MOSFET) » en anglais) mais la présente invention ne se limite pas à ce type de transistors mais s'étend à tous types d'interrupteurs.

Les côtés haut HS et bas LS de l'onduleur 1 comprennent également respectivement un premier composant logique 5 dédié au pilotage des premiers interrupteurs 3 et un deuxième composant logique 5' dédié au pilotage des deuxièmes interrupteurs 3'. Ces composants logiques 5 et 5' sont par exemple des circuits ou réseaux logiques programmables complexes (« Complex Programmable Logic Device (CPLD) » en anglais) ou des circuits intégrés à application spécifique (« Application Specific Integrated Circuit (ASIC) » en anglais). Alternativement, ces composants logiques 5 et 5' peuvent également être des microcontrôleurs ou des réseaux de portes programmables in-situ (« Field Programmable Gate Array (FPGA) » en anglais). Le premier composant logique 5 peut commander individuellement l'ouverture ou la fermeture des premiers interrupteurs 3 tandis que le deuxième composant logique 5' peut commander individuellement l'ouverture ou la fermeture des deuxièmes interrupteurs 3'. Cependant, en fonctionnement normal, le premier 5 et le deuxième 5' composant logique ne font que transmettre les commandes d'ouverture et de fermeture respectivement aux premiers 3 et aux deuxièmes 3' interrupteurs, provenant par exemple d'une unité de commande décrite ultérieurement. Les éléments dédiés au pilotage des interrupteurs côté haut HS (premiers interrupteurs) sont alimentés par une première source d'alimentation (non représentée) tandis que les éléments dédiés au pilotage des interrupteurs côté bas LS (deuxièmes interrupteurs) sont alimentés par une deuxième source d'alimentation (non représentée) indépendante de la première source d'alimentation. Par exemple, dans le cas d'un onduleur situé dans un véhicule automobile électrique dont le moteur électrique est alimenté par une batterie, la deuxième source d'alimentation correspondra à cette batterie d'alimentation du moteur, aussi appelée batterie de traction, par exemple une batterie haute tension (supérieure à 100V par exemple) tandis que la première source d'alimentation correspondra à une deuxième batterie, par exemple une batterie d'alimentation des accessoires (12V par exemple).

Ainsi, l'utilisation des deux composants logiques 5 et 5' et de deux sources d'alimentation indépendantes répartis sur le côté haut HS et le côté bas LS de l'onduleur 1 permet de pouvoir contrôler au moins les premiers 3 ou les deuxièmes 3' interrupteurs en cas de dysfonctionnement de l'un des composants logiques 5 ou 5' ou de l'une des sources d'alimentation.

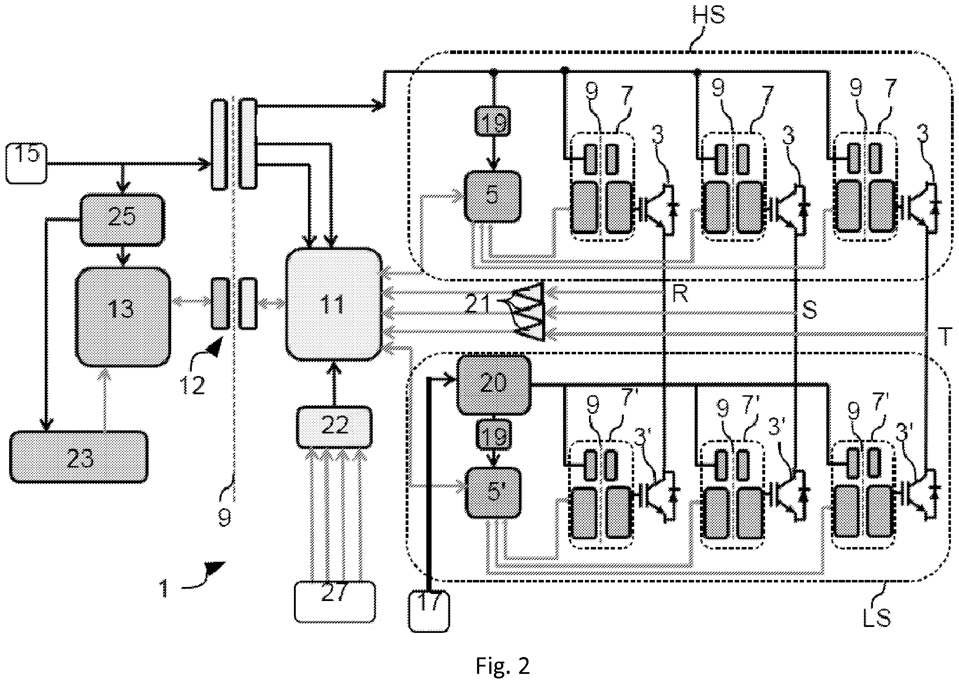

Une architecture du circuit électronique de commande d'onduleur triphasé va maintenant être décrite en détails à partir de la figure 2. Chaque interrupteur 3 et 3' de l'onduleur 1 est associé à une unité de pilotage (« driver » en anglais) notée 7 pour les premiers interrupteurs et 7' pour les deuxièmes interrupteurs, lesdites unités de pilotage 7 et 7' étant alimentées respectivement par la première 15 et la deuxième 17 source d'alimentation. Une barrière de potentiel 9 peut être placée au niveau des unités de pilotage 7, 7' ce qui permet une isolation électrique, notamment entre les masses haute tension et basse tension, pour renforcer la protection des personnes. Les unités de pilotages 7 et 7' sont reliées respectivement au premier et au deuxième composant logique 5 et 5'.

L'onduleur 1 comprend également une unité de traitement 11 reliée au premier et au deuxième composant logique 5 et 5' et destinée à communiquer avec une unité de commande 13. Dans le cas présent, l'unité de traitement 11 et l'unité de commande 13 sont deux unités distinctes, par exemple séparées et reliées par une interface électrique 12. L'unité de traitement 11 est par exemple un composant logique comme un réseau de portes programmables in-situ (« Field Programmable Gate Array (FPGA) » en anglais) ou un microcontrôleur ou un microprocesseur ; et l'unité de commande 13 peut être un microcontrôleur ou microprocesseur. L'interface électrique 12 entre l'unité de commande 13 et l'unité de traitement 11 est par exemple une interface périphérique de série (« Serial Peripheral Interface (SPI) » en anglais) et peut comprendre une barrière de potentiel 9 procurant un isolement électrique pour renforcer la protection des usagers. L'utilisation d'une interface périphérique de série permet de regrouper plusieurs types de signaux et de réduire le nombre d'isolateurs nécessaire pour réaliser la barrière de potentiel 9.

Les unités de traitement 11 et de commande 13 sont alimentées toutes les deux par la première 15 ou la deuxième 17 alimentation. Alternativement, l'unité de traitement 11 peut être alimentée par la première alimentation 15 et l'unité de commande 13 par la deuxième alimentation 17 ou inversement. Dans le cas de la figure 2, l'unité de commande 13 et l'unité de traitement 11 sont alimentées par la première alimentation 15 qui peut être une batterie d'accessoire 15, par exemple une batterie 12 volts. La première alimentation 15 alimente à la fois l'unité de commande 13, l'unité de traitement 11 et les éléments du côté haut HS de l'onduleur 1 ainsi que des capteurs 27 de l'onduleur 1. Une barrière de potentiel 9 peut être installée entre la batterie d'accessoire 15 d'une part et les éléments du côté haut HS et les capteurs 27 de l'onduleur 1 d'autre part. Les éléments du côté bas LS de l'onduleur 1 sont alimentés par la deuxième source d'alimentation 17, qui peut être la batterie de traction 17 du moteur électrique du véhicule. Cependant, les deux sources d'alimentation 15 et 17 peuvent être inversées. Par ailleurs, des régulateurs linéaires de tension (« low dropout regulator (LDO) » en anglais) 19 peuvent être installés entre les sources d'alimentation 15 et 17 et les composants logiques 5 et 5' de manière à adapter la tension d'alimentation à la tension de fonctionnement des composants logiques 5 et 5', par exemple 3V dans le cas de circuits logiques programmables complexes. Du côté de la batterie de traction 17, un composant additionnel 20 peut être introduit entre la batterie de traction 17 et le régulateur linéaire de tension 19 pour convertir la haute tension fournie par la batterie de traction 17 en une tension de 15 volts, la tension de 15 volts étant fournie au régulateur linéaire de tension 19.

L'onduleur 1 comprend également des comparateurs 21, trois dans le cas présent, dont les entrées respectives sont reliées aux points milieux respectifs R, S et T, et dont les sorties sont reliées à l'unité de traitement 11. Les comparateurs 21 permettent de comparer une grandeur électrique des points milieux, généralement la tension, à une valeur théorique qui est fonction des commandes transmises aux interrupteurs 3 et 3'. L'unité de commande 13 établit un plan de commande des interrupteurs 3 et 3' en fonction des commandes de l'utilisateur, par exemple de l'appui du conducteur sur l'accélérateur dans le cas d'un véhicule électrique ; et/ou des paramètres de fonctionnement du moteur ou du véhicule mesurés par des capteurs, comme un capteur de position du rotor du moteur électrique 23 ou de paramètres de fonctionnement de l'onduleur 1 (comme par exemple la tension du bus DC, l'intensité et la phase du courant ou la température des éléments...) mesurés par des capteurs 27 et renvoyés vers l'unité de traitement 11, généralement via un convertisseur analogique/numérique 22.

Un élément 25 tel qu'un système de puce de base (« System Basis Chip » en anglais) peut également être utilisé pour alimenter l'unité de commande 13 et le capteur de position du rotor 23 et permettre une surveillance (« watchdog » en anglais) et une réinitialisation (« reset » en anglais) de ces éléments.

Le plan de commande correspond par exemple aux instants d'ouverture et de fermeture des interrupteurs 3 et 3' établis par une modulation à largeur d'impulsions (MLI ou « Pulse Width Modulation (PWM) » en anglais). Ces commandes sont transmises par l'unité de commande 13 à l'unité de traitement 11 qui prend également en compte les paramètres de fonctionnement de l'onduleur 1 renvoyés par les différents capteurs comme par exemple la valeur de tension continue du bus, l'intensité et la phase du courant fourni par le bus....L'unité de traitement 11 peut alors par exemple introduire ou supprimer des temps morts au niveau des commandes de modulation ou seulement transmettre les commandes sans les modifier.

L'unité de traitement 11 transmet ces commandes aux unités de pilotage 7 et 7' via les composants logiques 5 et 5'. Les unités de pilotage 7 et 7' pilotent alors l'ouverture et la fermeture des différents interrupteurs 3 et 3'. En fonction de la configuration des interrupteurs 3 et 3' de chaque branche B1, B2 et B3, la valeur de tension au niveau du point milieu (R, S et T) varie. Les comparateurs 21 permettent de comparer la valeur de tension mesurée au niveau du point milieu R, S ou T avec une valeur de tension attendue qui est en fonction des commandes transmises par l'unité de traitement 11 ou l'unité de commande 13. Ainsi, en cas de dysfonctionnement d'un élément du côté haut HS ou du côté bas LS, comme par exemple un interrupteur 3 ou 3', une unité de pilotage 7 ou 7' ou même un problème au niveau d'un câble de connexion, l'unité de traitement 11 détecte ce dysfonctionnement grâce aux comparateurs 21. Les comparateurs 21 permettent également à l'unité de traitement 11 de détecter un dysfonctionnement d'un composant logique 5 ou 5' puisqu'en cas de dysfonctionnement d'un composant logique 5 ou 5', les commandes issues de l'unité de traitement 11 ne sont pas transmises correctement par les composants logiques 5 et 5' et les interrupteurs associés 3 ou 3' ne seront pas pilotés conformément aux commandes transmises par l'unité de traitement 11. Des signaux de contrôle échangés entre l'unité de traitement 11 et les composants logiques 5 et 5' peuvent aussi être utilisés par l'unité de traitement 11 pour détecter un dysfonctionnement d'un composant logique 5, 5'.

Par ailleurs, l'unité de traitement 11 peut détecter une défaillance de l'unité de commande 13 grâce à des signaux de contrôle transmis par l'unité de commande 13, par exemple si l'unité de commande 13 envoie un signal d'erreur à l'unité de traitement 11 ou par le biais de signaux de surveillance de type chien de garde (ou « watchdog » en anglais). De la même manière, les composants logiques 5 et 5' peuvent détecter un dysfonctionnement de l'unité de traitement 11 grâce à des signaux de contrôle provenant de l'unité de traitement, par exemple s'ils reçoivent des signaux d'erreur provenant de l'unité de traitement 11 ou détectent une anomalie dans les signaux de contrôle de type « watchdog ». Ainsi, avec l'architecture présentée sur la figure 2, il est possible de détecter un dysfonctionnement des différents éléments de l'onduleur 1.

Différentes architectures utilisant différents types de signaux de contrôle entre les différents éléments du circuit de commande de l'onduleur 1 vont maintenant être présentées plus en détail dans la suite de la description.

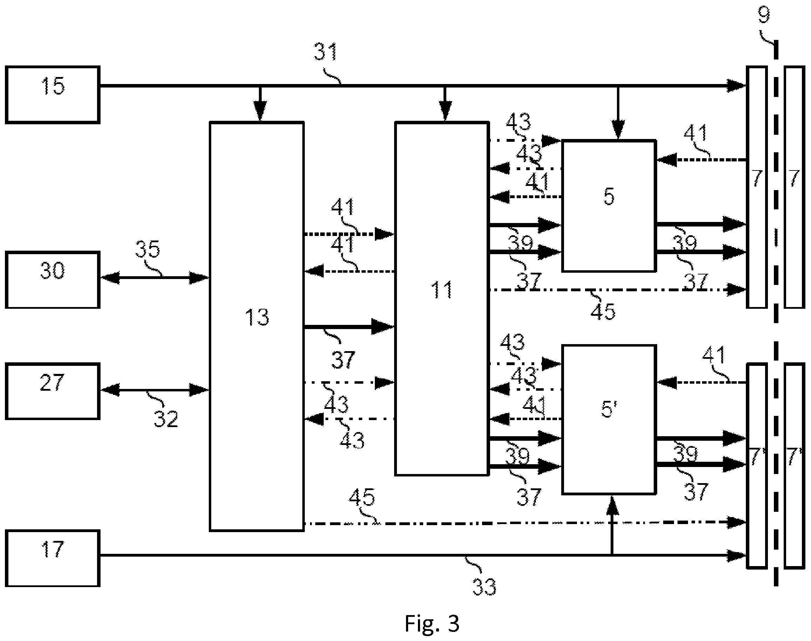

La figure 3 représente un premier mode de réalisation correspondant à l'architecture de la figure 2. Les flèches 31 et 33 relient respectivement la première 15 et la deuxième 17 alimentations aux éléments qu'elles alimentent. La première alimentation 15 alimente l'unité de commande 13, l'unité de traitement 11, les éléments (5, 7) du côté haut HS tandis que la deuxième alimentation 17 alimente les éléments (5', 7') du côté bas LS. L'unité de commande 13 est reliée d'une part à des éléments de traitement 30 du véhicule par exemple via un bus de communication série (aussi appelé « controller area network (CAN) » en anglais) 35 et d'autre part à des capteurs 27 du véhicule ou de l'onduleur 1 via une connexion 32. Les signaux de commande sont représentés par des flèches pleines et correspondent aux signaux de modulation pour les flèches 37 et aux signaux d'horloges pour les flèches 39. Les flèches pointillées représentent les signaux de contrôle et sont de trois types : les flèches 41 en pointillés réguliers correspondent aux signaux d'erreur ou signaux de faute, les flèches 43 avec un motif deux points et un trait qui correspondent aux signaux de surveillance (ou signaux « watchdog » en anglais) et les flèches 45 avec un motif deux points et trois traits qui correspondent aux signaux de permission (ou signaux « enable » en anglais).

Les signaux d'erreur 41 sont envoyés lorsqu'une anomalie est détectée par un élément tandis que les signaux de surveillance 43 sont envoyés en permanence de sorte qu'une absence d'un signal de surveillance ou un signal anormal peut s'interpréter comme un dysfonctionnement. Enfin, les signaux de permission 45 permettent d'activer ou désactiver un élément, en particulier de contrôler un élément afin qu'il fonctionne normalement ou dans un mode alternatif. Dans le cas présent, les signaux de permission 45 sont envoyés par l'unité de commande 13 et l'unité de traitement 11 vers respectivement les unités de pilotage 7' du côté bas LS et les unités de pilotage 7 du côté haut HS de sorte que quand ces signaux de permission 45 sont au niveau 1, les unités de pilotage 7, 7' pilotent les interrupteurs 3 et 3' en fonction des signaux de commande reçus des composants logiques 5 et 5' et lorsque les signaux de permission sont au niveau 0, les unités de pilotage 7, 7' sont inhibées et ne commandent plus les interrupteurs 3 et 3' qui restent alors ouverts (les commandes associées au niveau 0 et au niveau 1 peuvent évidemment être inversées). Enfin, si aucun signal n'est envoyé par l'unité de commande 13 ou l'unité de traitement 11, le signal de permission 45 prend une valeur haute impédance. Dans le cas de la présente invention, ce signal haute impédance est interprété comme un signal au niveau 1, par exemple en utilisant une résistance de rappel ou résistance de tirage (« pull-up » en anglais) au niveau des unités de pilotages 7, 7'.

Lorsqu'un dysfonctionnement est détecté, il convient alors de mettre en œuvre une procédure visant à réduire au maximum le risque d'accident lié à ce dysfonctionnement.

Dans le cas de la présente invention, cette procédure vise à mettre en court-circuit, c'est-à-dire à fermer, les interrupteurs 3 du côté haut HS de l'onduleur 1 tandis que les autres interrupteurs, du côté bas LS, restent ouverts, ou à mettre en court-circuit les interrupteurs 3' du côté bas LS de l'onduleur 1 tandis que les autres interrupteurs, du côté haut HS, restent ouverts, de manière à obtenir un moteur, et donc un véhicule, en roue libre. L'utilisateur peut alors utiliser les freins mécaniques pour immobiliser le véhicule. Cette procédure permet d'éviter un arrêt brutal du véhicule.

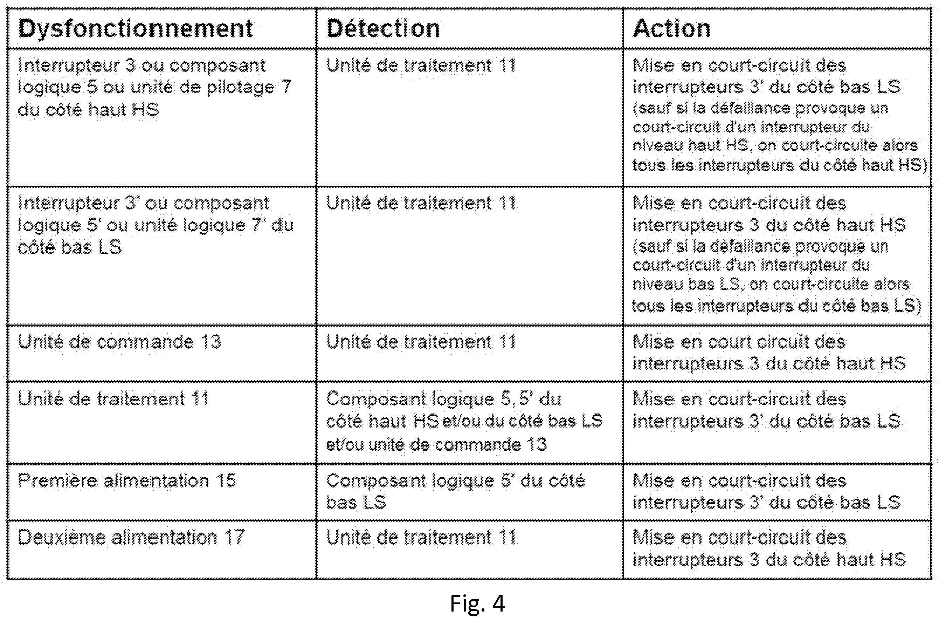

Les différents dysfonctionnements, leur mode de détection et les commandes instaurées en cas de détection d'un dysfonctionnement vont maintenant être décrits, pour la configuration du circuit d'alimentation et de commande de l'onduleur de la figure 3 à partir du tableau récapitulatif de la figure 4. Dans ce tableau, la première colonne du tableau indique les différents dysfonctionnements que l'on peut rencontrer au niveau de l'onduleur 1. La deuxième colonne indique l'élément de l'onduleur 1 qui détecte le dysfonctionnement. La troisième colonne indique l'action générée en réponse au dysfonctionnement, cette action étant initiée par l'élément ayant détecté le dysfonctionnement indiqué dans la deuxième colonne.

Le premier type de dysfonctionnement correspond à un dysfonctionnement d'un interrupteur 3, d'une unité de pilotage 7 ou d'un composant logique 5 du côté haut HS. Ce dysfonctionnement est détecté par l'unité de traitement 11 via les comparateurs 21 ou via les signaux de contrôle, comme par exemple les signaux d'erreur 41 renvoyés par le premier composant logique 5 ou les signaux de surveillance 43 renvoyés par le premier composant logique 5 en cas de dysfonctionnement du premier composant logique 5. Pour l'ensemble des signaux de contrôle, la détection d'un dysfonctionnement peut également correspondre à l'absence de réception de signaux de contrôle.
Si le dysfonctionnement ou la défaillance entraîne un court-circuit de l'un au moins des interrupteurs 3 du côté haut HS, ce qui peut être détecté via les comparateurs 21, l'unité de traitement 11 commande la fermeture de tous les interrupteurs 3 du côté haut HS et l'ouverture des interrupteurs 3' du côté bas LS. Pour ce faire, l''unité de traitement 11 peut indiquer à l'unité de commande 13 le dysfonctionnement via les signaux d'erreur 41. L'unité de commande 13 peut alors inhiber les unités de pilotage 7' du côté bas LS via les signaux de permission 45 pour ouvrir les interrupteurs 3'.
Sinon, l'unité de traitement 11 commande la fermeture des interrupteurs 3' du côté bas LS via le deuxième composant logique 5'. L'unité de traitement 11 inhibe les unités de pilotage 7 du côté haut HS via les signaux de permission 45. Ainsi, les premiers interrupteurs 3 se retrouvent en position ouverte tandis que les deuxièmes interrupteurs 3' se retrouvent en court-circuit ce qui entraîne la mise en roue libre du véhicule.

Le deuxième type de dysfonctionnement correspond à un dysfonctionnement d'un interrupteur 3', d'une unité de pilotage 7' ou d'un composant logique 5' du côté bas LS de l'onduleur 1. Ce dysfonctionnement est détecté par l'unité de traitement 11 via les comparateurs 21 ou via les signaux de contrôle, comme par exemple les signaux d'erreur 41 renvoyés par le deuxième composant logique 5' ou les signaux de surveillance 43 renvoyés par le deuxième composant logique 5' en cas de dysfonctionnement du deuxième composant logique 5'.
Si le dysfonctionnement ou la défaillance entraîne un court-circuit de l'un au moins des interrupteurs 3' du côté bas LS, ce qui peut être détecté via les comparateurs 21, l'unité de traitement 11 commande la fermeture de tous les interrupteurs 3' du côté bas LS et l'ouverture des interrupteurs 3 du côté haut HS. L'unité de traitement 11 peut inhiber les unités de pilotage 7 du côté haut HS via les signaux de permission 45 pour ouvrir les interrupteurs 3.
Sinon, l'unité de traitement 11 commande la fermeture des premiers interrupteurs 3 via le premier composant logique 5. L'unité de traitement 11 indique à l'unité de commande 13 le dysfonctionnement via les signaux d'erreur 41. L'unité de commande 13 inhibe alors les unités de pilotage 7' du côté bas LS via les signaux de permission 45. Ainsi, les premiers interrupteurs 3 se retrouvent en court-circuit tandis que les deuxièmes interrupteurs 3' se retrouvent ouverts ce qui entraîne la mise en roue libre du véhicule.

Le troisième type de dysfonctionnement correspond à un dysfonctionnement de l'unité de commande 13. Ce dysfonctionnement est détecté par l'unité de traitement 11 via les signaux de contrôle envoyés par l'unité de commande 13, c'est-à-dire soit les signaux d'erreur 41, soit les signaux de surveillance 43 transmis vers l'unité de traitement 11. Le dysfonctionnement peut également être détecté par l'unité de commande 13 elle-même par un auto-diagnostic ou par un composant 25 dédié à la surveillance comme par exemple une puce de base (« System Basis Chip» en anglais). L'unité de traitement 11 commande alors la fermeture des premiers interrupteurs 3 via le composant logique 5 et commande l'ouverture des deuxièmes interrupteurs 3' via le deuxième composant logique 5'. Si le dysfonctionnement de l'unité de commande 13 provoque le passage à 0 des signaux de permission 45, les deuxièmes interrupteurs 3' se retrouvent également en position ouverte.

Le quatrième type de dysfonctionnement correspond à un dysfonctionnement de l'unité de traitement 11. Ce dysfonctionnement est détecté par les composants logiques 5 et 5' grâce aux signaux de surveillance 43 et/ou par l'unité de commande 13 grâce aux signaux de surveillance 43 ou aux signaux d'erreur 41. Le deuxième composant logique 5' commande alors la fermeture des deuxièmes interrupteurs 3' tandis que le premier composant logique 5 commande l'ouverture des premiers interrupteurs 3. En cas de dysfonctionnement de l'unité de traitement 11 entraînant un passage à 0 des signaux de permission 45, les premiers interrupteurs 3 se retrouvent également en position ouverte.

Le cinquième type de dysfonctionnement correspond à un dysfonctionnement de la première alimentation 15. Ce dysfonctionnement est détecté par le deuxième composant logique 5' puisque les éléments du côté haut HS de l'onduleur 1, l'unité de commande 11 et l'unité de traitement 13 ne sont plus alimentés. Le deuxième composant logique 5' commande alors la fermeture des deuxièmes interrupteurs 3'. Les unités de pilotage 7 du côté haut HS n'étant pas alimentées, les premiers interrupteurs 3 sont en position ouverte.

Le sixième type de dysfonctionnement correspond à un dysfonctionnement de la deuxième alimentation 17. Ce dysfonctionnement est détecté par l'unité de traitement 11 via les comparateurs 21 ou via les signaux de surveillance 43 renvoyés (ou non renvoyés) par le deuxième composant logique 5'. L'unité de traitement 11 commande alors la fermeture des premiers interrupteurs 3 via le premier composant logique 5 et indique le dysfonctionnement à l'unité de commande 13 via les signaux d'erreur 41.

Ainsi, la configuration de la figure 3 permet d'obtenir la mise en roue libre du véhicule lorsqu'un dysfonctionnement apparaît sur l'un des composants du circuit d'alimentation et de commande de l'onduleur 1. Ainsi, suite à un dysfonctionnement le conducteur peut immobiliser le véhicule en utilisant le frein mécanique du véhicule.

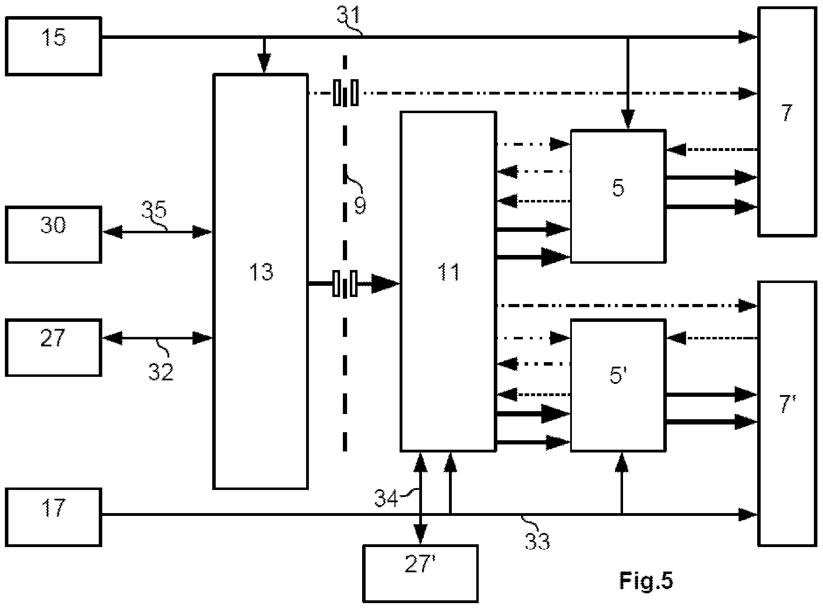

La figure 5 représente une deuxième configuration du circuit d'alimentation et de commande de l'onduleur 1 dans laquelle l'unité de commande 13 et l'unité de traitement 11 sont alimentées par deux sources d'alimentation différentes. Dans cet exemple, une barrière de potentiel 9 est placée entre l'unité de commande 13 et l'unité de traitement 11. Cette barrière de potentiel 9 permet de se passer de la barrière de potentiel 9 située au niveau des unités de pilotage 7, 7'. Cependant, un positionnement des barrières de potentiel 9 comme dans l'exemple illustré à la figure 3 est également possible. Les signaux échangés entre l'unité de commande 13 et l'unité de traitement 11 sont les mêmes que dans le mode de réalisation de la figure 3 mais sont regroupés dans une liaison de type interface périphérique de série de manière à réduire le nombre d'isolateurs nécessaires pour réaliser la barrière de potentiel 9.

La première alimentation 15 alimente l'unité de commande 13 et les composants 5, 7 du côté haut HS tandis que la deuxième alimentation 17 alimente l'unité de traitement 11 et les composants 5' et 7' du côté bas LS. L'unité de commande 13 est reliée d'une part à des éléments de traitement 30 du véhicule par exemple via un bus de communication série (aussi appelé « controller area network (CAN) » en anglais) 35 et d'autre part à des capteurs 27 du véhicule ou de l'onduleur 1 via une connexion 32. Des capteurs 27' peuvent être également reliés à l'unité de traitement 11 via une connexion 34. Les signaux de contrôle échangés entre les différents éléments du circuit d'alimentation sont les mêmes que pour le mode de réalisation de la figure 3.

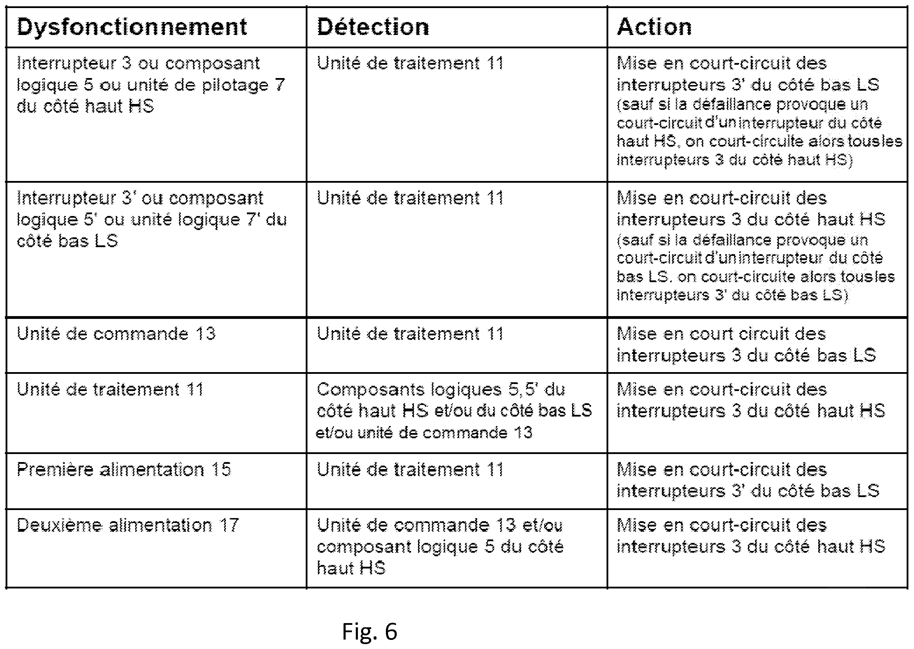

La gestion des différents dysfonctionnements pouvant survenir avec cette deuxième configuration va maintenant être décrite à partir des figures 5 et 6.

Le premier type de dysfonctionnement correspond à un dysfonctionnement d'un interrupteur 3, d'une unité de pilotage 7 ou d'un composant logique 5 du côté haut HS. Ce dysfonctionnement est détecté par l'unité de traitement 11 via les comparateurs 21 ou via les signaux de contrôle, comme par exemple les signaux d'erreur 41 renvoyés par le premier composant logique 5 ou via les signaux de surveillance 43 renvoyés par le premier composant logique 5 en cas de dysfonctionnement du premier composant logique 5.
Si le dysfonctionnement ou la défaillance entraîne un court-circuit de l'un au moins des interrupteurs 3 du côté haut HS, ce qui peut être détecté via les comparateurs 21, l'unité de traitement 11 commande la fermeture de tous les interrupteurs 3 du côté haut HS et l'ouverture des interrupteurs 3' du côté bas LS. L'unité de traitement 11 peut inhiber les unités de pilotage 7' du côté bas LS via les signaux de permission 45 pour ouvrir les interrupteurs 3'.
Sinon, l'unité de traitement 11 commande la fermeture des deuxièmes interrupteurs 3' via le deuxième composant logique 5' et indique à l'unité de commande 13 le dysfonctionnement via les signaux d'erreur 41. L'unité de commande 13 inhibe alors les unités de pilotage 7 du côté haut HS via les signaux de permission 45 de manière à mettre les premiers interrupteurs 3 en position ouverte. Ainsi, les premiers interrupteurs 3 se retrouvent en position ouverte tandis que les deuxièmes interrupteurs 3' se retrouvent en court-circuit, ce qui entraîne la mise en roue libre du véhicule.

Le deuxième type de dysfonctionnement correspond à un dysfonctionnement d'un interrupteur 3', d'une unité de pilotage 7' ou d'un composant logique 5' du côté bas LS de l'onduleur 1. Ce dysfonctionnement est détecté par l'unité de traitement 11 via les comparateurs 21 ou via les signaux d'erreur 41 renvoyés par le deuxième composant logique 5' ou via les signaux de contrôle, comme par exemple les signaux de surveillance 43 renvoyés par le deuxième composant logique 5' en cas de dysfonctionnement du deuxième composant logique 5'. Si le dysfonctionnement ou la défaillance entraîne un court-circuit de l'un au moins des interrupteurs 3' du côté bas LS, ce qui peut être détecté via les comparateurs 21, l'unité de traitement 11 commande la fermeture de tous les interrupteurs 3' du côté bas LS et l'ouverture des interrupteurs 3 du côté haut HS. Pour ce faire, l'unité de traitement 11 peut indiquer à l'unité de commande 13 le dysfonctionnement via les signaux d'erreur 41. L'unité de commande 13 peut alors inhiber les unités de pilotage 7 du côté haut HS via les signaux de permission 45 pour ouvrir les interrupteurs 3.
Sinon, l'unité de traitement 11 commande la fermeture des premiers interrupteurs 3 via le premier composant logique 5. L'unité de traitement 11 inhibe les unités de pilotage 7' du côté bas LS via les signaux de permission 45. Ainsi, les premiers interrupteurs 3 se retrouvent en court-circuit tandis que les deuxièmes interrupteurs 3' se retrouvent ouverts, ce qui entraîne la mise en roue libre du véhicule.

Le troisième type de dysfonctionnement correspond à un dysfonctionnement de l'unité de commande 13. Ce dysfonctionnement est détecté par l'unité de traitement 11 via les signaux de contrôle envoyés par l'unité de commande 13, c'est-à-dire soit les signaux d'erreur 41, soit les signaux de surveillance 43 transmis vers l'unité de traitement 11. Le dysfonctionnement peut également être détecté par l'unité de commande 13 elle-même par un auto-diagnostic ou par un composant 25 dédié à la surveillance comme par exemple une puce de base. L'unité de traitement 11 commande alors l'ouverture des premiers interrupteurs 3 via le premier composant logique 5 et la fermeture des deuxièmes interrupteurs 3' via le deuxième composant logique 5'. Si le dysfonctionnement de l'unité de commande 13 provoque le passage à 0 des signaux de permission 45, les premiers interrupteurs 3 se retrouvent également ouverts.

Le quatrième type de dysfonctionnement correspond à un dysfonctionnement de l'unité de traitement 11. Ce dysfonctionnement est détecté par les composants logiques 5 et 5' du côté haut HS et du côté bas LS grâce aux signaux de surveillance 43 ainsi que par l'unité de commande 13 grâce aux signaux de surveillance 43 ou aux signaux d'erreur 41. Le deuxième composant logique 5' commande alors l'ouverture des deuxièmes interrupteurs 3'. Le premier composant logique 5 commande la fermeture des premiers interrupteurs 3. Si le dysfonctionnement de l'unité de traitement 11 provoque le passage à 0 des signaux de permission 45, les deuxièmes interrupteurs 3' se retrouvent également ouverts.

Le cinquième type de dysfonctionnement correspond à un dysfonctionnement de la première alimentation 15. Ce dysfonctionnement est détecté par l'unité de traitement 11 via les comparateurs 21 ou les signaux d'erreur 41 ou de surveillance 43 issus du premier composant logique 5 ou de l'unité de commande 13. L'unité de commande 11 commande alors la fermeture des deuxièmes interrupteurs 3' via le deuxième composant logique 5', les premiers interrupteurs 3 étant ouverts du fait de l'absence d'alimentation des composants 3, 5, 7 du côté haut HS.

Le sixième type de dysfonctionnement correspond à un dysfonctionnement de la deuxième alimentation 17. Ce dysfonctionnement est détecté par le premier composant logique 5 et/ou par l'unité de commande 13 via l'absence de signaux de surveillance 43 issus de l'unité de traitement 11. Le premier composant logique 5 commande alors la fermeture des premiers interrupteurs 3, les deuxièmes interrupteurs 3' étant ouverts du fait de l'absence d'alimentation des composants 3', 5' et 7' du côté bas LS.

Ainsi, la configuration de la figure 5 permet également d'obtenir la mise en roue libre du véhicule lorsqu'un dysfonctionnement apparaît sur l'un des composants du circuit d'alimentation de l'onduleur 1. Ainsi, suite à un dysfonctionnement le conducteur peut immobiliser le véhicule en utilisant le frein mécanique du véhicule.

L'utilisation des composants logiques 5 et 5' combinée à l'utilisation des deux sources d'alimentation indépendantes 15 et 17 respectivement pour le côté haut HS et le côté bas LS de l'onduleur 1 permettent donc d'une part une détection d'un dysfonctionnement d'un élément de l'onduleur 1 et d'autre part de mettre en court-circuit les premiers interrupteurs 3 situés du côté haut HS ou les deuxièmes interrupteurs 3' situés du côté bas LS de l'onduleur 1. Les modes de réalisation proposés permettent également de mettre les autres interrupteurs 3 ou 3' en position ouverte de manière à obtenir un moteur électrique avec un premier côté dont les interrupteurs 3, 3' sont ouverts et un deuxième côté dont les interrupteurs 3', 3 sont en court-circuit et donc un véhicule en roue libre ce qui permet au conducteur de pouvoir gérer lui-même la décélération du véhicule à l'aide du frein mécanique et permet donc d'éviter un freinage brutal au milieu d'une voie rapide par exemple. Une telle configuration de l'onduleur 1 permet d'assurer la sécurité des utilisateurs suite à un dysfonctionnement d'un des éléments de l'onduleur 1 sans que cela nécessite de nombreux équipements additionnels qui entraînent

## Revendications

1. Onduleur (1) comprenant une pluralité de branches (B1, B2, B3) montées en parallèle entre un premier point de connexion (C1) et un deuxième point de connexion (C2), lesdites branches (B1, B2, B3) comprenant un premier interrupteur (3) en série avec un deuxième interrupteur (3'), les premiers interrupteurs (3) étant reliés au premier point de connexion (C1) et agencés dans un côté haut (HS) de l'onduleur (1) et les deuxièmes interrupteurs (3') étant reliés au deuxième point de connexion (C2) et agencés dans un côté bas (LS) de l'onduleur (1), le côté haut (HS) de l'onduleur (1) comprend un premier composant logique (5) dédié au pilotage des premiers interrupteurs (3), le côté bas (LS) de l'onduleur (1) comprend un deuxième composant logique (5') dédié au pilotage des deuxièmes interrupteurs (3') et **caractérisé en ce que** le premier composant logique (5) et les premiers interrupteurs (3) appartenant au côté haut (HS) sont alimentés par une première source d'alimentation (15) et le deuxième composant logique (5') et les deuxièmes interrupteurs (3') appartenant au côté bas (LS) sont alimentés par une deuxième source d'alimentation (17) indépendante de la première source d'alimentation (15), ladite première source d'alimentation (15) et ladite deuxième source d'alimentation (17) étant configurées pour alimenter de façon indépendante les premiers (3) et les deuxièmes (3') interrupteurs, respectivement, permettant de contrôler les premiers (3) ou les deuxièmes (3') interrupteurs, respectivement, en cas de dysfonctionnement de la deuxième (17) ou de la première (15) source d'alimentation, respectivement.

2. Onduleur (1) selon la revendication 1, comprenant également une unité de traitement (11) configurée pour communiquer d'une part avec une unité de commande (13) et d'autre part avec le premier (5) et le deuxième (5') composant logique.

3. Onduleur (1) selon la revendication 2, dans lequel l'unité de traitement (11) est configurée pour détecter un dysfonctionnement d'un élément (3, 3', 5, 5', 7, 7') du côté haut (HS) ou du côté bas (LS).

4. Onduleur (1) selon la revendication 2 ou 3, comprenant également une pluralité de comparateurs (21) dont les entrées sont reliées respectivement aux points milieux (R, S, T) des branches (B1, B2, B3) et dont les sorties sont reliées à l'unité de traitement (11), les comparateurs (21) étant configurés pour comparer une grandeur électrique de leur point milieu (R, S, T) respectif à une valeur qui est fonction de la configuration des interrupteurs (3, 3'), l'unité de traitement (11) étant configurée pour détecter un dysfonctionnement d'un élément (3, 3', 5, 5', 7, 7') du côté haut (HS) ou du côté bas (LS) à partir d'un écart entre ladite grandeur électrique et ladite valeur.

5. Onduleur selon l'une des revendications 2 à 4, dans lequel l'unité de traitement (11) est configurée pour détecter un dysfonctionnement d'un élément (3, 5, 7) du côté haut (HS), respectivement d'un élément (3', 5', 7') du côté bas (LS), à partir de signaux de contrôle (41, 43) envoyés par ledit composant logique (5) du côté haut (HS), respectivement par ledit composant logique (5') du côté bas (LS).

6. Onduleur (1) selon l'une des revendications 2 à 5, dans lequel les composants logiques (5, 5') du côté haut (HS) et/ou du côté bas (LS) sont configurés pour détecter un dysfonctionnement de l'unité de traitement (11) à partir de signaux de contrôle (41, 43) envoyés par ladite unité de traitement (11).

7. Onduleur (1) selon l'une des revendications 2 à 6, dans lequel l'unité de traitement (11) est configurée pour commander la mise en court-circuit des premiers (3) ou deuxièmes (3') interrupteurs en fonction d'un dysfonctionnement d'un élément (3, 3', 5, 5', 7, 7') du côté haut (HS) ou du côté bas (LS).

8. Onduleur (1) selon l'une des revendications 2 à 7, dans lequel les composants logiques (5, 5') du côté bas (LS) et du côté haut (HS) sont configurés pour commander la mise en court-circuit des deuxièmes (3'), respectivement des premiers (3), interrupteurs en cas de dysfonctionnement de l'unité de traitement (11).

9. Onduleur (1) selon l'une des revendications 2 à 8, dans lequel l'unité de commande (13) est configurée pour détecter un dysfonctionnement de l'unité de traitement (11) à partir de signaux de contrôle (41, 43) envoyés par ladite unité de traitement (11), et/ou l'unité de traitement (11) est configurée pour détecter un dysfonctionnement de l'unité de commande (13) à partir de signaux de contrôle (41, 43) envoyés par ladite unité de commande (13).

10. Onduleur (1) selon l'une des revendications 2 à 9, dans lequel l'unité de traitement (11) ou l'unité de commande (13) sont configurées pour commander la mise en court-circuit des deuxièmes (3'), ou des premiers (3), interrupteurs en cas d'un dysfonctionnement.

11. Onduleur (1) selon l'une des revendications 2 à 10, dans lequel l'unité de commande (13) ou l'unité de traitement (11) sont configurées pour commander la mise en court-circuit des premiers (3) ou deuxièmes (3') interrupteurs par l'intermédiaire de signaux de permission (45) permettant d'activer ou désactiver les premiers (3) ou deuxièmes (3') interrupteurs.

12. Onduleur (1) selon la revendication 11, dans lequel l'unité de commande (13) est configurée pour envoyer des signaux de permission (45) vers le côté haut (HS) permettant d'activer ou désactiver les interrupteurs (3) du côté haut (HS), et l'unité de traitement (11) est configurée pour envoyer des signaux de permission (45) vers le côté bas (LS) permettant d'activer ou désactiver les interrupteurs (3') du côté bas (LS) ; ou l'unité de commande (13) est configurée pour envoyer des signaux de permission (45) vers le côté bas (LS) permettant d'activer ou désactiver les interrupteurs (3') du côté bas (LS), et l'unité de traitement (11) est configurée pour envoyer des signaux de permission (45) vers le côté haut (HS) permettant d'activer ou désactiver les interrupteurs (3) du côté haut (HS).

13. Onduleur (1) selon l'une des revendications 2 à 12, dans lequel l'unité de traitement(11) est un élément distinct de l'unité de commande (13).

14. Onduleur (1) selon l'une des revendications précédentes, configuré pour alimenter un moteur électrique de véhicule automobile à partir de la première source d'alimentation (15) ou de la deuxième source d'alimentation.

15. Onduleur selon l'une des revendications précédentes, dans lequel le côté haut (HS) comprend des premières unités de pilotage (7), le côté bas (LS) comprend des deuxièmes unités de pilotage (7'), les premiers et les deuxièmes interrupteurs (3, 3') étant pilotés respectivement via les premières (7) et les deuxièmes (7') unités de pilotage.

16. Onduleur (1) selon l'une des revendications précédentes et les revendications 5 ou 9, dans lequel les signaux de contrôle sont des signaux de surveillance (43) ou des signaux d'erreur (41).

17. Onduleur (1) selon l'une des revendications 2 à 16, dans lequel l'unité de traitement (11) et l'unité de commande (13) sont toutes les deux alimentées par une même source d'alimentation, c'est-à-dire que soit toutes les deux sont alimentées par la première source d'alimentation (15), soit toutes les deux sont alimentées par la deuxième (17) source d'alimentation.

18. Onduleur (1) selon l'une des revendications 2 à 16, dans lequel l'unité de traitement (11) et l'unité de commande (13) sont alimentées par des sources distinctes, c'est-à-dire que soit l'unité de traitement (11) est alimentée par la première source d'alimentation (15), et l'unité de commande (13) est alimentée par la deuxième source d'alimentation (17), soit l'unité de traitement (11) est alimentée par la deuxième source d'alimentation (17), et l'unité de commande (13) est alimentée par la première source d'alimentation (15).

19. Procédé de commande d'un onduleur (1) selon l'une des revendications 2 à 18, dans lequel en cas de dysfonctionnement de l'unité de traitement (11), le premier composant logique (5), respectivement le deuxième composant logique (5'), détecte ledit dysfonctionnement de l'unité de traitement (11) à partir de signaux de contrôle (43) envoyés par ladite unité de traitement (11) et commande la mise en court-circuit des premiers (3), respectivement des deuxièmes (3'), interrupteurs.

20. Procédé de commande d'un onduleur (1) selon l'une des revendications 2 à 18, dans lequel en cas de dysfonctionnement d'un élément (3, 5, 7) du côté haut (HS) ou d'un élément (3', 5', 7') du côté bas (LS), l'unité de traitement (11) détecte ledit dysfonctionnement et commande la mise en court-circuit des premiers interrupteurs (3) ou des deuxièmes interrupteurs (3') en fonction du type de dysfonctionnement.

21. Procédé de commande d'un onduleur (1) selon l'une des revendications 2 à 18, dans lequel en cas de dysfonctionnement de l'unité de commande (13), l'unité de traitement (11) détecte ledit dysfonctionnement de l'unité de commande (13) à partir de signaux de contrôle (41, 43) envoyés par l'unité de commande (13) et commande la mise en court-circuit des premiers (3) ou des deuxièmes (3') interrupteurs.

22. Procédé de commande d'un onduleur (1) selon l'une des revendications 2 à 17, dans lequel l'unité de traitement (11) et l'unité de commande (13) sont toutes les deux alimentées par la première (15), respectivement la deuxième (17), source d'alimentation et dans lequel en cas de dysfonctionnement de la première (15), respectivement de la deuxième (17), source d'alimentation, le deuxième (5'), respectivement le premier (5), composant logique commande la mise en court-circuit des deuxièmes (3'), respectivement des premiers (3), interrupteurs.

23. Procédé de commande d'un onduleur (1) selon l'une des revendications 2 à 16 ou 18, dans lequel l'unité de traitement (11) est alimentée par la première (15), respectivement la deuxième (17), source d'alimentation, et l'unité de commande (13) est alimentée par la deuxième (17), respectivement la première (15) source d'alimentation ; et dans lequel en cas de dysfonctionnement de la source d'alimentation (15, 17) alimentant l'unité de commande (13), l'unité de traitement (11) commande la mise en court-circuit des interrupteurs (3', 3) alimentés par sa source d'alimentation (17, 15) ; et en cas de dysfonctionnement de la source d'alimentation (17, 15) alimentant l'unité de traitement (11), le composant logique (5, 5') alimenté par l'autre source d'alimentation (15, 17) commande la mise en court-circuit des interrupteurs (3, 3') alimentés par cette autre source d'alimentation (15, 17).

## Patentansprüche

1. Wechselrichter (1) umfassend eine Mehrzahl von Zweigen (B1, B2, B3), die zwischen einem ersten Anschlusspunkt (C1) und einem zweiten Anschlusspunkt (C2) parallel geschaltet sind, wobei die Zweige (B1, B2, B3) einen ersten Schalter (3) in Reihe mit einem zweiten Schalter (3') umfassen, wobei die ersten Schalter (3) mit dem ersten Anschlusspunkt (C1) verbunden und auf einer Hochseite (HS) des Wechselrichters (1) angeordnet sind und die zweiten Schalter (3') mit dem zweiten Anschlusspunkt (C2) verbunden und auf einer Niedrigseite (LS) des Wechselrichters (1) angeordnet sind,
wobei die Hochseite (HS) des Wechselrichters (1) einen ersten Logikbaustein (5) umfasst, der für die Ansteuerung der ersten Schalter (3) vorgesehen ist, die Niedrigseite (LS) des Wechselrichters (1) einen zweiten Logikbaustein (5') umfasst, der für die Ansteuerung der zweiten Schalter (3') vorgesehen ist,
und **dadurch gekennzeichnet, dass** der erste Logikbaustein (5) und die ersten Schalter (3), die zur Hochseite (HS) gehören, von einer ersten Stromquelle (15) gespeist werden und der zweite Logikbaustein (5') und die zweiten Schalter (3'), die zur Niedrigseite (LS) gehören, von einer zweiten Stromquelle (17) gespeist werden, die von der ersten Stromquelle (15) unabhängig ist, wobei die erste Stromquelle (15) und die zweite Stromquelle (17) dazu ausgebildet sind, die ersten (3) beziehungsweise zweiten (3') Schalter unabhängig zu speisen, wodurch im Falle einer Störung der zweiten (17) beziehungsweise ersten (15) Stromquelle die ersten (3) beziehungsweise zweiten (3') Schalter gesteuert werden können.

2. Wechselrichter (1) nach Anspruch 1, ebenfalls umfassend eine Verarbeitungseinheit (11), die dazu ausgebildet ist, einerseits mit einer Steuereinheit (13) und andererseits mit dem ersten (5) und zweiten (5') Logikbaustein zu kommunizieren.

3. Wechselrichter (1) nach Anspruch 2, wobei die Verarbeitungseinheit (11) dazu ausgebildet ist, eine Störung eines Elements (3, 3', 5, 5', 7, 7') auf der Hochseite (HS) oder Niedrigseite (LS) festzustellen.

4. Wechselrichter (1) nach Anspruch 2 oder 3, ebenfalls umfassend eine Mehrzahl von Komparatoren (21), deren Eingänge jeweils mit den Mittelpunkten (R, S, T) der Zweige (B1, B2, B3) verbunden sind und deren Ausgänge mit der Verarbeitungseinheit (11) verbunden sind, wobei die Komparatoren (21) dazu ausgebildet sind, eine elektrische Größe ihres jeweiligen Mittelpunkts (R, S, T) mit einem Wert zu vergleichen, der von der Ausgestaltung der Schalter (3, 3') abhängig ist, wobei die Verarbeitungseinheit (11) dazu ausgebildet ist, eine Störung eines Elements (3, 3', 5, 5', 7, 7') auf der Hochseite (HS) oder Niedrigseite (LS) anhand einer Abweichung zwischen der elektrischen Größe und dem Wert festzustellen.

5. Wechselrichter nach einem der Ansprüche 2 bis 4, wobei die Verarbeitungseinheit (11) dazu ausgebildet ist, eine Störung eines Elements (3, 5, 7) auf der Hochseite (HS) beziehungsweise eines Elements (3', 5', 7') auf der Niedrigseite (LS) anhand von Kontrollsignalen (41, 43) festzustellen, die vom Logikbaustein (5) auf der Hochseite (HS) beziehungsweise vom Logikbaustein (5') auf der Niedrigseite (LS) gesendet werden.

6. Wechselrichter (1) nach einem der Ansprüche 2 bis 5, wobei die Logikbausteine (5, 5') auf der Hochseite (HS) und/oder der Niedrigseite (LS) dazu ausgebildet sind, eine Störung der Verarbeitungseinheit (11) anhand von Kontrollsignalen (41, 43) festzustellen, die von der Verarbeitungseinheit (11) gesendet werden.

7. Wechselrichter (1) nach einem der Ansprüche 2 bis 6, wobei die Verarbeitungseinheit (11) dazu ausgebildet ist, die Kurzschließung der ersten (3) oder zweiten (3') Schalter in Abhängigkeit von einer Störung eines Elements (3, 3', 5, 5', 7, 7') auf der Hochseite (HS) oder Niedrigseite (LS) zu steuern.

8. Wechselrichter (1) nach einem der Ansprüche 2 bis 7, wobei die Logikbausteine (5, 5') auf der Niedrigseite (LS) und der Hochseite (HS) dazu ausgebildet sind, die Kurzschließung der zweiten (3') beziehungsweise ersten (3) Schalter im Falle einer Störung der Verarbeitungseinheit (11) zu steuern.

9. Wechselrichter (1) nach einem der Ansprüche 2 bis 8, wobei die Steuereinheit (13) dazu ausgebildet ist, eine Störung der Verarbeitungseinheit (11) anhand von Kontrollsignalen (41, 43) festzustellen, die von der Verarbeitungseinheit (11) gesendet werden, und/oder die Verarbeitungseinheit (11) dazu ausgebildet ist, eine Störung der Steuereinheit (13) anhand von Kontrollsignalen (41, 43) festzustellen, die von der Steuereinheit (13) gesendet werden.

10. Wechselrichter (1) nach einem der Ansprüche 2 bis 9, wobei die Verarbeitungseinheit (11) oder die Steuereinheit (13) dazu ausgebildet sind, im Falle einer Störung die Kurzschließung der zweiten (3') oder ersten (3) Schalter zu steuern.

11. Wechselrichter (1) nach einem der Ansprüche 2 bis 10, wobei die Steuereinheit (13) oder die Verarbeitungseinheit (11) dazu ausgebildet sind, die Kurzschließung der ersten (3) oder zweiten (3') Schalter mittels Erlaubnissignalen (45) zu steuern, die es gestatten, die ersten (3) oder zweiten (3') Schalter zu aktivieren oder zu deaktivieren.

12. Wechselrichter (1) nach Anspruch 11, wobei die Steuereinheit (13) dazu ausgebildet ist, Erlaubnissignale (45) an die Hochseite (HS) zu senden, die es gestatten, die Schalter (3) auf der Hochseite (HS) zu aktivieren oder zu deaktivieren, und die Verarbeitungseinheit (11) dazu ausgebildet ist, Erlaubnissignale (45) an die Niedrigseite (LS) zu senden, die es gestatten, die Schalter (3') auf der Niedrigseite (LS) zu aktivieren oder zu deaktivieren; oder die Steuereinheit (13) dazu ausgebildet ist, Erlaubnissignale (45) an die Niedrigseite (LS) zu senden, die es gestatten, die Schalter (3') auf der Niedrigseite (LS) zu aktivieren oder zu deaktivieren, und die Verarbeitungseinheit (11) dazu ausgebildet ist, Erlaubnissignale (45) an die Hochseite (HS) zu senden, die es gestatten, die Schalter (3) auf der Hochseite (HS) zu aktivieren oder zu deaktivieren.

13. Wechselrichter (1) nach einem der Ansprüche 2 bis 12, wobei die Verarbeitungseinheit (11) ein gesondertes Element der Steuereinheit (13) ist.

14. Wechselrichter (1) nach einem der vorhergehenden Ansprüche, der dazu ausgebildet ist, einen Kraftfahrzeug-Elektromotor ausgehend von der ersten Stromquelle (15) oder der zweiten Stromquelle zu speisen.

15. Wechselrichter nach einem der vorhergehenden Ansprüche, wobei die Hochseite (HS) erste Ansteuerungseinheiten (7) umfasst, die Niedrigseite (LS) zweite Ansteuerungseinheiten (7') umfasst, wobei die ersten und zweiten Schalter (3, 3') jeweils über die ersten (7) beziehungsweise zweiten (7') Ansteuerungseinheiten angesteuert werden.

16. Wechselrichter (1) nach einem der vorhergehenden Ansprüche und den Ansprüchen 5 oder 9, wobei die Kontrollsignale Überwachungssignale (43) oder Fehlersignale (41) sind.

17. Wechselrichter (1) nach einem der Ansprüche 2 bis 16, wobei die Verarbeitungseinheit (11) und die Steuereinheit (13) alle beide von einer selben Stromquelle gespeist werden, das heißt, dass entweder alle beide von der ersten Stromquelle (15) gespeist werden oder alle beide von der zweiten (17) Stromquelle gespeist werden.

18. Wechselrichter (1) nach einem der Ansprüche 2 bis 16, wobei die Verarbeitungseinheit (11) und die Steuereinheit (13) von gesonderten Quellen gespeist werden, das heißt, dass entweder die Verarbeitungseinheit (11) von der ersten Stromquelle (15) gespeist wird und die Steuereinheit (13) von der zweiten Stromquelle (17) gespeist wird, oder die Verarbeitungseinheit (11) von der zweiten Stromquelle (17) gespeist wird und die Steuereinheit (13) von der ersten Stromquelle (15) gespeist wird.

19. Verfahren zur Steuerung eines Wechselrichters (1) nach einem der Ansprüche 2 bis 18, wobei im Falle einer Störung der Verarbeitungseinheit (11) der erste Logikbaustein (5) beziehungsweise der zweite Logikbaustein (5') die Störung der Verarbeitungseinheit (11) anhand von Kontrollsignalen (43) feststellt, die von der Verarbeitungseinheit (11) gesendet werden, und die Kurzschließung der ersten (3) beziehungsweise zweiten (3') Schalter steuert.

20. Verfahren zur Steuerung eines Wechselrichters (1) nach einem der Ansprüche 2 bis 18, wobei im Falle einer Störung eines Elements (3, 5, 7) auf der Hochseite (HS) oder eines Elements (3', 5', 7') auf der Niedrigseite (LS) die Verarbeitungseinheit (11) die Störung feststellt und die Kurzschließung der ersten Schalter (3) oder zweiten Schalter (3') in Abhängigkeit von der Art der Störung steuert.

21. Verfahren zur Steuerung eines Wechselrichters (1) nach einem der Ansprüche 2 bis 18, wobei im Falle einer Störung der Steuereinheit (13) die Verarbeitungseinheit (11) die Störung der Steuereinheit (13) anhand von Kontrollsignalen (41, 43) feststellt, die von der Steuereinheit (13) gesendet werden, und die Kurzschließung der ersten (3) oder zweiten Schalter (3') steuert.

22. Verfahren zur Steuerung eines Wechselrichters (1) nach einem der Ansprüche 2 bis 17, wobei die Verarbeitungseinheit (11) und die Steuereinheit (13) alle beide von der ersten (15) beziehungsweise zweiten (17) Stromquelle gespeist werden und wobei im Falle einer Störung der ersten (15) beziehungsweise zweiten (17) Stromquelle der zweite (5') beziehungsweise erste (5) Logikbaustein die Kurzschließung der zweiten (3') beziehungsweise ersten (3) Schalter steuert.

23. Verfahren zur Steuerung eines Wechselrichters (1) nach einem der Ansprüche 2 bis 16 oder 18, wobei die Verarbeitungseinheit (11) von der ersten (15) beziehungsweise zweiten (17) Stromquelle gespeist wird und die Steuereinheit (13) von der zweiten (17) beziehungsweise ersten (15) Stromquelle gespeist wird; und wobei im Falle einer Störung der Stromquelle (15, 17), die die Steuereinheit (13) speist, die Verarbeitungseinheit (11) die Kurzschließung der Schalter (3', 3) steuert, die von ihrer Stromquelle (17, 15) gespeist werden; und im Falle einer Störung der Stromquelle (17, 15), die die Verarbeitungseinheit (11) speist, der Logikbaustein (5, 5'), der von der anderen Stromquelle (15, 17) gespeist wird, die Kurzschließung der Schalter (3, 3') steuert, die von dieser anderen Stromquelle (15, 17) gespeist werden.

## Claims

1. Inverter (1) comprising a plurality of branches (B1, B2, B3) connected in parallel between a first connection point (C1) and a second connection point (C2), said branches (B1, B2, B3) comprising a first switch (3) in series with a second switch (3'), the first switches (3) being connected to the first connection point (C1) and arranged in a high side (HS) of the inverter (1) and the second switches (3') being connected to the second connection point (C2) and arranged in a low side (LS) of the inverter (1), the high side (HS) of the inverter (1) comprises a first logic component (5) dedicated to driving the first switches (3), the low side (LS) of the inverter (1) comprises a second logic component (5') dedicated to driving the second switches (3') and **characterized in that** the first logic component (5) and the first switches (3) belonging to the high side (HS) are supplied with power by a first power supply source (15) and the second logic component (5') and the second switches (3') belonging to the low side (LS) are supplied with power by a second power supply source (17) independent from the first power supply source (15), said first power supply source (15) and said second power supply source (17) being configured to independently supply the first (3) and the second (3') switches, respectively, with power, allowing the first (3) or the second (3') switches, respectively, to be controlled in the event of a malfunction of the second (17) or of the first (15) power supply source, respectively.

2. Inverter (1) according to Claim 1, also comprising a processing unit (11) configured to communicate on one hand with a control unit (13) and on the other hand with the first (5) and the second (5') logic component.

3. Inverter (1) according to Claim 2, wherein the processing unit (11) is configured to detect a malfunction of an element (3, 3', 5, 5', 7, 7') of the high side (HS) or of the low side (LS).

4. Inverter (1) according to Claim 2 or 3, also comprising a plurality of comparators (21) the inputs of which are connected, respectively, to the midpoints (R, S, T) of the branches (B1, B2, B3) and the outputs of which are connected to the processing unit (11), the comparators (21) being configured to compare an electrical quantity of their respective midpoint (R, S, T) to a value which depends on the configuration of the switches (3, 3'), the processing unit (11) being configured to detect a malfunction of an element (3, 3', 5, 5', 7, 7') of the high side (HS) or of the low side (LS) on the basis of a difference between said electrical quantity and said value.

5. Inverter according to one of Claims 2 to 4, wherein the processing unit (11) is configured to detect a malfunction of an element (3, 5, 7) of the high side (HS) or an element (3', 5', 7') of the low side (LS), respectively, on the basis of control signals (41, 43) sent by said logic component (5) of the high side (HS) or by said logic component (5') of the low side (LS), respectively.

6. Inverter (1) according to one of Claims 2 to 5, wherein the logic components (5, 5') of the high side (HS) and/or of the low side (LS) are configured to detect a malfunction of the processing unit (11) on the basis of control signals (41, 43) sent by said processing unit (11) .

7. Inverter (1) according to one of Claims 2 to 6, wherein the processing unit (11) is configured to order the short-circuiting of the first (3) or second (3') switches depending on a malfunction of an element (3, 3', 5, 5', 7, 7') of the high side (HS) or of the low side (LS) .

8. Inverter (1) according to one of Claims 2 to 7, wherein the logic components (5, 5') of the low side (LS) and of the high side (HS) are configured to order the short-circuiting of the second (3') or the first (3) switches, respectively, in the event of a malfunction of the processing unit (11).

9. Inverter (1) according to one of Claims 2 to 8, wherein the control unit (13) is configured to detect a malfunction of the processing unit (11) on the basis of control signals (41, 43) sent by said processing unit (11), and/or the processing unit (11) is configured to detect a malfunction of the control unit (13) on the basis of control signals (41, 43) sent by said control unit (13).

10. Inverter (1) according to one of Claims 2 to 9, wherein the processing unit (11) or the control unit (13) are configured to order the short-circuiting of the second (3') or of the first (3) switches in the event of a malfunction.

11. Inverter (1) according to one of Claims 2 to 10, wherein the control unit (13) or the processing unit (11) are configured to order the short-circuiting of the first (3) or second (3') switches by means of enable signals (45) allowing the first (3) or second (3') switches to be activated or deactivated.

12. Inverter (1) according to Claim 11, wherein the control unit (13) is configured to send enable signals (45) to the high side (HS) allowing the switches (3) of the high side (HS) to be activated or deactivated, and the processing unit (11) is configured to send enable signals (45) to the low side (LS) allowing the switches (3') of the low side (LS) to be activated or deactivated; or the control unit (13) is configured to send enable signals (45) to the low side (LS) allowing the switches (3') of the low side (LS) to be activated or deactivated, and the processing unit (11) is configured to send enable signals (45) to the high side (HS) allowing the switches (3) of the high side (HS) to be activated or deactivated.

13. Inverter (1) according to one of Claims 2 to 12, wherein the processing unit (11) is an element distinct from the control unit (13).

14. Inverter (1) according to one of the preceding claims, configured to supply a motor vehicle electric motor with power from the first power supply source (15) or from the second power supply source.

15. Inverter according to one of the preceding claims, wherein the high side (HS) comprises first drivers (7), the low side (LS) comprises second drivers (7'), the first and the second switches (3, 3') being driven via the first (7) and second (7') drivers, respectively.

16. Inverter (1) according to one of the preceding claims and Claim 5 or 9, wherein the control signals are watchdog signals (43) or error signals (41).

17. Inverter (1) according to one of Claims 2 to 16, wherein the processing unit (11) and the control unit (13) are both supplied with power by one and the same power supply source, that is to say that either both are supplied with power by the first power supply source (15) or both are supplied with power by the second power supply source (17).

18. Inverter (1) according to one of Claims 2 to 16, wherein the processing unit (11) and the control unit (13) are supplied with power by different sources, that is to say that either the processing unit (11) is supplied with power by the first power supply source (15) and the control unit (13) is supplied with power by the second power supply source (17) or the processing unit (11) is supplied with power by the second power supply source (17) and the control unit (13) is supplied with power by the first power supply source (15).

19. Method for controlling an inverter (1) according to one of Claims 2 to 18, wherein, in the event of a malfunction of the processing unit (11), the first logic component (5) or the second logic component (5'), respectively, detects said malfunction of the processing unit (11) on the basis of control signals (43) sent by said processing unit (11) and orders the short-circuiting of the first (3) or of the second (3') switches, respectively.

20. Method for controlling an inverter (1) according to one of Claims 2 to 18, wherein, in the event of a malfunction of an element (3, 5, 7) of the high side (HS) or of an element (3', 5', 7') of the low side (LS), the processing unit (11) detects said malfunction and orders the short-circuiting of the first switches (3) or of the second switches (3') depending on the type of malfunction.

21. Method for controlling an inverter (1) according to one of Claims 2 to 18, wherein, in the event of a malfunction of the control unit (13), the processing unit (11) detects said malfunction of the control unit (13) on the basis of control signals (41, 43) sent by the control unit (13) and orders the short-circuiting of the first (3) or of the second (3') switches.

22. Method for controlling an inverter (1) according to one of Claims 2 to 17, wherein the processing unit (11) and the control unit (13) are both supplied with power by the first (15) or the second (17) power supply source, respectively, and wherein, in the event of a malfunction of the first (15) or of the second (17) power supply source, respectively, the second (5') or the first (5) logic component, respectively, orders the short-circuiting of the second (3') or of the first (3) switches, respectively.

23. Method for controlling an inverter (1) according to one of Claims 2 to 16 or 18, wherein the processing unit (11) is supplied with power by the first (15) or the second (17) power supply source, respectively, and the control unit (13) is supplied with power by the second (17) or the first (15) power supply source, respectively; and wherein, in the event of a malfunction of the power supply source (15, 17) supplying the control unit (13) with power, the processing unit (11) orders the short-circuiting of the switches (3, 3') supplied with power by its power supply source (17, 15); and, in the event of a malfunction of the power supply source (17, 15) supplying the processing unit (11) with power, the logic component (5, 5') supplied with power by the other power supply source (15, 17) orders the short-circuiting of the switches (3, 3') supplied with power by this other power supply source (15, 17).
